# EUROPÄISCHE PATENTSCHRIFT

(11) **EP 1 851 266 B1**
(45) Veröffentlichungstag und Bekanntmachung des Hinweises auf die Patenterteilung: **13.10.2010**
(21) Anmeldenummer: 06722518.5
(22) Anmeldetag: 23.02.2006
(51) Int. Cl.: C08J 7/00

(54) **HYDROPHOBE FLUORIERTE POLYMEROBERFLÄCHEN**
HYDROPHOBIC FLUORINATED POLYMER SURFACES
SURFACE POLYMERES FLUOREES HYDROPHOBES

(30) Priorität: 24.02.2005 DE 102005008927
(43) Veröffentlichungstag der Anmeldung: 07.11.2007
(60) Teilanmeldung: 09000340.1
(73) Patentinhaber: PHILIPPS-UNIVERSITÄT MARBURG, D-35032 Marburg (DE)
(72) Erfinder: GREINER, Andreas, 35287 Amöneburg (DE); AGARWAL, Seema, 35039 Marburg (DE); BOGNITZKI, Michael, 35059 Marburg (DE); HORST, Sven, 38126 Braunschweig (DE)
(74) Vertreter: Buchhold, Jürgen
(86) Internationale Anmeldenummer: PCT/DE2006/000334
(87) Internationale Veröffentlichungsnummer: WO 2006/089531

(56) Entgegenhaltungen:
- US-A- 4 508 606
- US-A1- 2002 084 553
- US-A1- 2002 192 385
- US-A1- 2004 192 833

## Beschreibung

Die vorliegenden Erfindung betrifft eine hydrophobe Polymeroberfläche, insbesondere eine superhydrophobe Polymeroberfläche, enthaltend wenigstens ein Homo- oder Copolymer, ein Verfahren zur Herstellung derartiges Polymeroberflächen sowie deren Verwendung.

Derartige Oberflächen werden für eine Vielzahl von Anwendungen eingesetzt, beilspielsweise, um Textilien oder Fassadenfronten mit wasserabweisenden Eigenschaften auszurüsten, und/oder, um die Haftung von beispielsweise Schmutzpartikeln, Lebensmitteln, Mikroorganismen, Farben, Tinten, Harzen oder Kunststoffen auf entsprechenden Oberflächen wirkungsvoll zu verhindern. Des Weiteren sind hydrophobe Oberflächen auch bei Vorrichtungen zur Aufbewahrung und Handhabung von Flüssigkeiten, insbesondere von wäissrigen Flüssigkeiten, vorteilhaft, da dadurch eine restlose Entleerung der entsprechenden Vorrichtungen ermöglicht wird.

Ein physikalisches Maß für die Hydrophobie einer Oberfläche ist der Kontaktwinkel. Bei einem Kontaktwinkel von 0° bildet das Wasser auf der Festkörperoberfläche einen monomolekularen Film, während bei einem Kontaktwinkel von 180" ein Wassertropfen die Festkörperoberfläche nur an einem Punkt berührt. Unter hydrophob versteht der Fachmann solche Oberflächen, die einen Kontaktwinkel von größer 90° aufweisen, wohingegen Oberflächen mit einem Kontaktwinkel von kleiner gleich 90° als hydrophil bezeichnet werden. Hydrophobe Oberflächen mit einem Kontaktwinkel von größer gleich 160° werden auch als superhydrophob bezeichnet.

Es ist bekannt, dass die mikroskopische Topographie einer Oberfläche wesentlichen Einfluss auf deren Hydrophilie/Hydrophobie hat. Raue Oberflächen beispielsweise weisen einen größere Kontaktwinkel als glatte Oberflächen gleicher Zuaammensetzung auf. Mikroskopisch betrachtet weisen alle Oberflächen Vertiefungen und Erhöhungen auf, die je nach Art der betrachteten Oberfläche unterschiedlich tief bzw. hoch sind. Beträgt die Differenz zwischen dem tiefsten Punkt einer Vertiefung bzw. dem höchsten Punkt einer Erhöhung einerseits und der durchschnittlichen Höhe der Oberflächen weniger als 0,4 µm, bezeichnet der Fachmann diese Oberfläche als glatt; ist die genannte Differenz hingegen größer gleich 0,4 µm bzw. größer gleich 10 µm, handelt es sich um eine mikroraue Oberfläche bzw. raue Oberfläche, Dieser Einfluss wird bei einer Vielzahl bekannter hydrophober Oberflächen ausgenutzt.

Aus der EP 0 772 514 B1 sind hydrophobe, selbstreinigende Oberflächen von Gegenständen bekannt, die eine künstliche Oberflächenstruktur aus Erhebungen und Vertiefungen aufweisen, wobei der Abstand zwischen den Erhebungen im Bereich von 5 bis 200 µm und die Höhe der Erhebungen im Bereich von 5 bis 100 µm liegen, zumindest die Erhebungen aus hydrophoben Polymeren bestehen und die Erhebungen nicht durch Wasser oder durch Detergenzien ablösbar sind. Zur Herstellung dieser Oberflächenstrukturen wird beispielsweise vorgeschlagen, eine glatte Oberfläche aus Kunststoff mit Klebstoff zu bestreichen und anschließend mit einem Teflonpulver zu beschichten. Nachteilig an diesem Verfahren ist jedoch, dass dieses Umständlich und insbesondere nicht reproduzierbar durchführbar ist.

In der DE 100 62 203 A1 wird ein Verfahren zur Prägung von hydrophoben Polymere mit metallischer Prägestöcken oder Prägewalzen zwecks Ausbringung von Strukturen auf die Polymerobcrfläche mit einer Höhe von jeweils 50 nm bis 1.000 µm und einem Abstand der Strukturen von 50 nm bis 500 µm offenbart, bei dem die Prägestöcke oder walzen vor dem ersten Prägevorgang beispielsweise mit Fluor-Organosilanen hydrophobiert werden.

Aus der DE 101 29 116 A1 sind hydrophobe Polymerfasern mit selbstreinigenden Eigenschaften bekannt, die in der Oberflächen Partikel mit einem mitlleren Partikeldurchmesser von 20 nm bis 100 µm aufweisen, wobei die Partikel auf deren Oberfläche vorzugsweise unregelmäßige Feinstrukturen im Nanaineterbereich haben. Die einzubringenden Partikel weisen dabei hydrophobe Eigenschaften auf oder werden vor oder nach dem Aufbringen auf die Polymeroberfläche mit hydrophoben Verbindungen behandelt, welche vorzugsweise aus der aus Alkylsilanen, Fluoralkylsilancn und Disilazanen bestehenden Gruppe ausgewählt sind.

Zudem werden in der DE 102 10 668 A1 mittels Spritzgussverfahren hergestellte Vorrichtungen beschrieben, welche auf ihrer Oberfläche eine fest verankerte Lage hydrophober Mikropartikel, weiche vorzugsweise Erhebungen einer mittleren Höhe von 20 nm bis 25 µm und einen mittleren Abstand von 20 nm bis 25 µm haben, aufweisen. Dabei werden die Mikropartikel vor dem Spritzgießen auf die Spritzgussform aufgebracht und während des anschließenden Spritzgießens in die Oberfläche des Spritzgusskörpers eingedrückt. Das Aufbringen der Mikropartikel erfolgt durch Aufbringen einer Suspension aus Partikeln und Lösungsmittel oder eines Aerosols, das Partikel und Treibgas enthält, auf die Spritzgussform und anschließendes Verdampfen des Lösungsmittels.

Ferner ist aus der DE 102 54 718 A1 ein seibstreinigender Verbundwerkstoff auf Basis eines mit einer Vielzahl von Öffnungen versehenes Substrates mit einer auf und in diesem Substrat befindlichen porösen anorganischen Beschichtung bekannt, wobei die inneren und/oder äußeren Oberfläche des Verbundwerkstoffes zumindest teilweise eine Struktur aus Erhebungen mit einer mittleren Höhe der Erhebungen von 1 nm bis 100 µm und einem mittleren Abstand der Erhebungen voneinander von 1 nm bis 100 µm, die durch hydrophobe Mikropartikel gebildet werden, aufweisen. Die Partikel können dabei optional durch Behandlung mit zumindest einer aus der aus Alkylsilanen, Fluoralkylsilanen und Disitazanen bestehenden Gruppe ausgewählten Verbindung mit hydrophoben Eigenschaften ausgestattet sein. Das Fixieren der Partikel auf dem Verbundwerkstoff erfolgt durch Erwärmen auf eine Temperatur von 100 °C bis 400 °C.

Nachteilig an den vorgenannten Oberflächen ist deren umständliche, teils unreproduzierbare Herstellbarkeit. Zudem weisen diese teilweise eine sehr begrenzte Hydrophobie auf.

Lei Jiang, Yong Zhao und Jin Zhai berichten in "A Lotus-Leaf-liko Superhydrophobic Surface: A Porous Microsphere/Nanofiber Composite Film Prepared by Electrohydrodynamics", Angew. Chem. Int. Ed. 2004, S. 4338-4341 über die Herstellung von hydrophoben Kompositen aus Nanofasern und Beads durch Elektroverspinnen einer Lösung von 6 bis 10 Ges.-% Polystyrol in Dimethylformamid. Die mit diesem Verfahren erhaltenen Komposite weisen in Wasser einen Kontaktwinkel von etwa 160° auf, wobei in den Kompositen Mikrosphären und Nanofasern dicht über das gesamte gebildete Substrat verteil, fast alle Nanofasern in einem stabilen dreidimensionalen Netzwerk verwoben und die Mikrosphären in dieses Netzwerk eingebettet sind. Die Mikrosphären haben dabei eine Größe von 3 µm bis 7 µm und die Mikrofasern eine Größe von 60 µm bis 140 µm. Nach der Lehre der vorgenannten Druckschrift hängt die Morphologie der Komposite von der Konzentration der versponnenen Lösung ab. Während eine hohe Polymerkonzentration in der Spinnlösung von 20 bis 30 Gew.-% zur Ausbildung ultrafeiner Fasern mit geringer Hydrophobie führt, soll eine verdünnte Spinnlösung mit einer Polymerkonzentration von 2 bis 3 Gew.-% zur Bildung von Mikropartikel führen, die jedoch aufgrund ihrer geringen Dichte nicht auf einer Substratoberfläche haften und somit für eine Polymeroberfläche ungeeignet sind. Die Bildung der beschriebenen hydrophoben Komposite stellt somit einen Mesozustand zwischen den beiden vorgenannten Bedingungen dar und findet nur bei einer Polymerkonzentration von 6 bis 10 Gew.-% in der Spinnlösung statt. Ein Nachteil dieses Verfahrens liegt in der geringen Hydrophobie des eingesetzten Polymermaierials Polystyrol, so dass Komposite mit zufriedenstellender Hydrophobie nur bei entsprechender Ausgestaltung der Kompositoberfläche erhalten werden.

Die US 2004/0192833 A1 sieht vor, dass eine hydrophobe Polymoroberfläche unter anderem aus Polymeren besteht, die teilweise fluorierte oder perfluorieret aromatische Seitengruppen enthalten können. Diese Polymeroberfläche ist jedoch nicht superhydrophob und weist somit auch keinen Lotuseffekt auf.

Die US 2002/192385 A1 sieht vor, dass eine hydrophobe Polymeroberfläche Fluoralkyle oder Fluorsilane enthält. Darüber hinaus werden Polymeroberflächen mit einer rauen Oberfläche offenbart. Der Kontaktwinkel dieser Polymeroberflächen beträgt 110" bis 130°. Die US 2002/084553 A1 sieht vor, dass einer Oberfläche, die aus hydrophoben Polymeren besteht, zur Erhöhung der Hydrophobizität mit einer Prägetechnik behandelt wird. Der maximale Kontaktwinkel beträgt hier etwa 150°. Auch diese beiden Oberfläche sind somit nicht superhydrophob.

Die US 4 508 606 A sieht eine Oberfläche vor, die beispielsweise aus Silikonpolymeren mit fluorsubstituierten Arylseitengruppen besteht. Diese zeichnet sich insbesondere durch eine hohe Benetzbarkeit mit Kontaktwinkeln kleiner als 50° aus. Superhydrophobie einhergehend mit einem Kontaktwinkel von mindestens 160° ist dort ausdrücklich unerwünscht.

Aufgabe der vorliegenden Erfindung ist es, Polymeroberflächen bereitzustellen, welche einfach und reproduzierbar herstellbar sind und eine hohe Hydrophobie aufweisen. Insbesondere sollen die Polymeroberflächen superhydrophob sein und den Lotuseffekt aufweisen.

Erfindungsgemäß wird diese Aufgabe durch eine Polymeroberfläche mit den Merkmalen von Patentanspruch 1 gelöst.

Die Erfindung sieht bei einer hydrophoben Polymeroberfläche, enthaltend wenigstens ein Homo- oder Copolymer, welches eine Seitenketten umfassend wenigstens eine fluorsubstituiere Arylgruppe aufweist, vor, dass die Potymeroberfläche durch das Etektrospinnverfahren hergestellt ist, wobei die Polymeroberfläche in Form von Partikeln oder von durch Fasern verbundenen Partikeln ausgebildet ist und wobei die Oberfläche in Wasser einen Kontaktwinkel von wenigstens 160" aufweist.

Überraschenderweise konnte im Rahmen der vorliegenden Erfindung gefunden werden, dass Polymeroberflächen enthaltend wenigstens ein Homo- oder Copolymer, welches wenigstens eine Seitenkette mit wenigstens einer fluorsubstituierten Arylgruppe aufweist, eine hohe Hydrophobie aufweisen. Insbesondere war es für den Fachmann unerwartet, dass derartige Polymerbeschichtungen bei entsprechender Oberflächenstruktur superhydrophobe Eigenschaften charakterisiert durch Kontaktwinkel von größer gleich 160° bzw. einen Abrollwinkel von 0° aufweisen. Ein weiterer Vorteil der erfindungsgemäßen Polymerbeschichtungen liegt in deren einfachen und reproduzierbaren Herstellbarkeit, beispielsweise durch Elektrospinnen einer entsprechenden Polymerlösung.

Gute Ergebnisse werden insbesondere erhalten, wenn die hydrophobe Polymeroberfläche wenigstens ein Homo- oder Copolymer, welches wenigstens eine Seitenkette mit einer Mono-, Di-, Tri-, Tetra- und/oder Pentafluorphenylgruppe aufweist, enthält.

Gemäß einer weiteren bevorzugten Ausführungsform der vorliegenden Erfindung weist das Homo- oder Copolymer der hydrophoben Polymeroberfläche wenigstens eine Seitengruppe mit einer 2,3,4,5,6-Pentafluorphenylgruppe, 2-Fluorphenylgruppe. 3-Fluorphefiylgruppe und/oder 4-Fluorphenylgruppe auf.

Grundsätzlich können die erfindungsgemäß vorgesehenen fluorsubstituierten Arylgruppen auf jede dem Fachmann bekannte Weise mit der Polymerhauplkette covalent verbunden sein. Beispielsweise können diese Gruppen über eine Spacergruppe an die Hauptkette gebunden sein, wobei insbesondere mit C₁-C₂₀-Alkylgruppen, bevorzugt C₁-C₆-Alkylgruppen und besonders bevorzugt Methylen- und/oder Ethylengruppen als Spacer gute Ergebnisse erzielt werden. Ganz besonders bevorzugt ist die wenigstens eine fluorsubstituierte Arylgruppen jedoch unmittelbar bzw. direkt an die Polymerhauptkette kovalent gebunden.

In Weiterbildung des Erfindungsgedankens wird vorgeschlagen, in der hydrophoben Polymeroberfläche ein Homo- oder Copolymer vorzusehen, welches in den Seitenketten wenigstens 10 Mol.-%, bevorzugt wenigstens 20 Mol.-%, besonders bevorzugt wenigstens 30 Mol.-% und ganz besonders bevorzugt 30 bis 70 Mol.-% fluorsubstituierte Arylgruppen aufweist. Derartige Oberflächen weisen eine besonders hohe Hydrophobie auf.

Gemäß einer weiteren bevorzugten Ausführungsform der vorliegenden Erfindung enthält die hydrophobe Polymeroberfläche wenigstens ein aus der aus 2,3,4,5,6-Polypentafluorstyrol, Poly-2-fluorstyrol, Poly-3-fluorstyrol, Poly-4-fluorstyrol, F5-PPX sowie Homopolymeren von 2-fluoraryl-/3-fluoraryl-/4-fluoraryl-/ und 2,3,4,5,6-pentafluorarylsubstituerten Vinylmonomeren bestehenden Gruppe ausgewähltes Homopolymer, wobei als F5-PPX im Sinne der vorliegenden Erfindung ein Polymer der allgemeinen Formel I 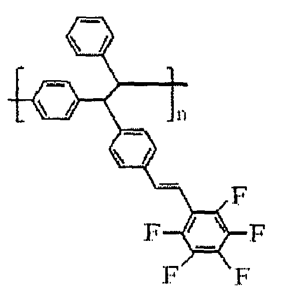 worin n eine ganze Zahl zwischen 10 und 4.500, bevorzugt zwischen 20
und 2.200 und besonders bevorzugt zwischen 100 und 670 ist bezeichnet wird.

Ebenso bevorzugt enthält die erfindungsgemäße hydrophobe Polymeroberfläche wenigstens ein Copolymer aus einem aus der aus 2,3,4,5,6,-Pentafluorstyrol, 2-Fluorstyrol, 3-Fluorstyrol, 4-Fluorstyrol, F5-PPX und Kombinationen hiervon bestehenden Gruppe ausgewählten Monomer und einem aus der aus Styrol, substituierten Styrol-Derivaten, 5,6-Benzo-2-methylen-1,3-dioxepan, Methylmethacrylat, N-Phenylmaleimid und Kombinationen hiervon bestehenden Gruppe ausgewählten Monomer. Dabei können die Monomere in dem Copolymer statistisch, blockweise oder in einer taktischen Ordnung angeordnet sein. Auch Pfropfcopolymere haben sich als geeignet erwiesen.

Erfindungsgemäß können die hydrophoben Polymeroberflächen eines oder, in beliebiger Kombination miteinander, zwei oder mehrere der vorgenannten Homo- und Copolymere enthalten.

Besonders gute Ergebnisse werden mit hydrophoben Polymeroberflächen erhalten, die wenigstens 50 Gew.-%, bevorzugt wenigstens 70 Gew.-%, besonders bevorzugt wenigstens 90 Gew.-% und ganz besonders bevorzugt 100 Gew.-% eines oder, in beliebiger Kombination miteinander, zwei oder mehrere der vorgenannten Homo- und Copolymere enthalten.

Gemäß einer weiteren bevorzugten Ausführungsform der vorliegenden Erfindung weist das wenigstens eine Homo- oder Copolymer ein gewichtsgemitteltes Molekulargewicht von 1.000 bis 2.000.000 g/mol, bevorzugt von 10.000 bis 1.000.000 g/mol und besonders bevorzugt von 50.000 bis 300.000 g/mol auf.
In Weiterbildung des Erfindungsgedankens wird vorgeschlagen, die hydrophobe Polymeroberfläche in Form von Partikeln oder von durch Fasern verbundenen Partikeln vorzusehen. Dadurch wird erreicht, dass die Polymeroberfläche rau ist, was zu einer Erhöhung der Hydrophobie der Oberfläche führt, Insbesondere solche Polymeroberflächen können auch superhydrophob sein.

Vorzugsweise beträgt der mittlere Durchmesser der Partikel weniger als 3 µm, bevorzugt zwischen 1 nm und 2 µm und besonders bevorzugt zwischen 500 nm und 1 µm.

Gesäß einer weiteren bevorzugten Ausführungsform der vorliegenden Erfindung weisen die Polymerbeschichtungen Erhebungen und/oder Vertiefungen im Nanometerbereich auf. Vorzugsweise weisen die Erhöhungen und/oder Vertiefungen im Mittel eine Höhe von 20 nm bis 500 nm, besonders bevorzugt von 20 nm bis 200 nm, auf. Der Abstand der Erhöhungen bzw. Vertiefungen auf den Partikeln beträgt vorzugsweise weniger als 500 nm, ganz besonders bevorzugt weniger als 200 nm. Die zerklüfteten Strukturen mit Erhebungen und/oder Vertiefungen im Nanometerbereich können z.B. über Hohlräume, Poren. Riefen, Spitzen und/oder Zacken gebildet werden, Zudem können die Partikel Teilchen im Sinne von DIN 53 206 sein. Partikel oder Teilchen gemäß dieser Norm können Einzelteilchen, aber auch Aggregate oder Agglomerate sein, wobei gemäß DIN 53 206 unter Aggregaten flächig oder kantenförmig aneinander gelagerte Primärteilchen (Partikel) und unter Agglomeraten punktförmig aneinander gelagert Primärteilchen (Partikel) verstanden werden. Partikel sind auch solche Teilchen, die sich aus Primärteilchen zu Agglomeralen oder Aggregaten zusammenlagern. Die Struktur dieser Partikel kann sphärisch, mäßig aggregiert, nahezu sphärisch, äußerst stark agglomeriert oder porös agglomeriert. Die bevorzugte Größe der Agglomerate bzw. Aggregate liegt zwischen 20 nm und 100 µm, besonders bevorzugt zwischen 200 nm und 30 µm.

Sofern die erfindungsgemäßen Polymerbeschichtungen die Form von Fasern aufweisen, beträgt deren Durchmesser vorzugsweise 10 nm bis 50 µm, besonders bevorzugt 50 nm bis 2 µm und ganz besonders bevorzugt 100 nm bis 1 µm.

Die erfindungsgemäßen Polymeroberflächen werden durch das Elektrospinnverfahren hergestellt. Bei dem Elektrospinnverfahren, welches beispielsweise von O.H. Reneker, H.D. Chun, Nanotechn. 7 (1996), Seite 216 f., in der DE 101 33 393 A1, DE 101 16 232 A1, DE 100 53 263 A1 und DE 100 23 456 A1 beschrieben ist, welche hiermit als Referenz eingeführt werde und als Teil der Offenbarung gelten, wird eine Polymerschmelze oder eine Polymerlösung an einer als Elektrode dienenden Kante einem hohen elektrischen Feld ausgesetzt. Dies kann beilspielsweise dadurch erreicht werden, dass die Polymerschmelze oder Polymerlösung in einem elektrischen Feld unter geringem Druck durch eine mit einem Pol einer Spannungsquelle verbundene Kanüle extrudiert wird. Aufgrund der dadurch erfolgenden elektrostatischen Aufladung der Polymerschmelze oder Polymerlösung entsteht ein auf die Gegenelektrode gerichteter Materialstrom, der sich auf dem Wege zur Gegenelektrode verfestigt. In Abhängigkeit von den Elektrodengeometrien werden mit diesem Verfahren Vliese bzw. so genannte Nonwovens oder Ensembles geordneter Fasern. Partikel oder durch Fasern miteinander verbundene Partikel erhalten.

Gemäß einer weiteren bevorzugten Ausführungsform der vorliegenden Erfindung weist die hydrophobe Polymeroberfläche in Wasser einen Abrollwinkel von maximal 50°, bevorzugt von maximal 40° und besonders bevorzugt von 0" auf.

Als Substrat für die erfindungsgemäßen Polymerbeschichtungen eignen sich grundsätzlich alle Unterlagen, insbesondere solche aus Kunststoff, Metall oder einer Legierung. Insbesondere mit Aluminium beschichtete PET-Substraten haben sich als besonders geeignet erweisen.

Ein weiterer Gegenstand der vorliegenden Erfindung ist ein Verfahren zur Herstellung der erfindungsgemäßen hydrophoben Polymeroberflächen, bei dem eine Lösung enthaltend wenigstens ein Homo- oder Copolymer, welches wenigstens eine Seitenkette umfassend mindestens eine fluorsubstituierte Arylgruppe aufweist, in einem Lösungsmittel elektroversponnen wird.

Besonders gute Ergebnisse werden erhalten, wenn eine Lösung aus einem oder mehreren der vorgenannten Polymere in einem organischen Lösungsmittel oder Lösungsmittelgemisch elektroversponnen wird, wobei das Lösungsmittel vorzugsweise aus der aus Tetrahydrofuran. Dimethylformamid, Trichlormethan und Kombinationen hiervon bestehenden Gruppe ausgewählt ist, Besonders bevorzugt wird als Lösungsmittel eine Mischung aus Tetrahydrofuran (THF) und Dimethylformamid (DMF), insbesondere eine 1:1 v/v Mischung hiervon, eingesetzt.

In Weiterbildung des Erfindungsgedankens wird vorgeschlagen, eine Lösung mit einer Polymerkonzentration, bezogen auf die Lösung, von 0,5 bis 20 Gew.-% zu elektrospinnen.

Gemäß einer weiteren bevorzugten Ausführungsform der vorliegenden Erfindung wird die Konzentration der eingesetzten Polymerlösung derart gewählt, dass die durch Elektrospinnen gebildete Polymeroberfläche die Form von Partikeln oder von durch Fasern verbundenen Partikeln annimmt, wobei entsprechende Partikel vorzugsweise einen mittleren Durchmesser von weniger als 3 µm, insbesondere zwischen 1 nm und 2 µm und besonders bevorzugt zwischen 500 nm und 1 µm aufweisen. Dadurch werden Polymeroberflächen mit besonders hoher Hydrophobizität erhalten, insbesondere superhydrophobe Polymeroberflächen mit einem Kontaktwinkel von größer gleich 160° und/oder einem Abrollwinkel von 0°. Der Wert der optimalen Polymerkonzentration hängt in erster Linie von der Zusammensetzung des Polymers und daneben von den konkreten Elektrospinnparametern ab und kann im Rahmen von Routineversuchen einfach bestimmt werden. Für zu elektroverspinnende Lösungen eines aus der aus Poly-2,3,4,5,6-pentafluorstyrol, Poly-2-fluorstyrol, Poly-3-fluorstyrol, Poly-4-fluorstyrol und F5-PPX bestehenden Gruppe ausgewählten Homopolymers und eines Copolymers bestehend aus einem aus der aus 2,3,4,5,6-Pentafluorstyrol, 2-Fluorstyrol, 3-Fluorstyrol, 4-Fluorstyrol und F5-PPX bestehenden Gruppe ausgewählten Monomers und einem aus der aus Styrol und 5,6-Benzo-2-methylen-1,3-dioxepan bestehenden Gruppe ausgewählten Monomer beispielsweise haben sich Lösungen mit einer Polymerkonzentration, bezogen auf die Lösung, von 1 bis 10 Gew.-%, bevorzugt 1 bis 5 Gew.-% und besonders bevorzugt von 2 Gew.-% als besonders geeignet erwiesen.

Vorzugsweise wird beim Elektrospinnverfahren der Abstand zwischen der Kanüle und der als Kollektor fungierenden Gegenelektrode sowie die Spannung zwischen den Elektroden derart eingestellt, dass sich zwischen den Elektroden ein elektrisches Feld von vorzugsweise 0,5 bis 5 kV/cm, besonders bevorzugt 1,0 bis 3,0 kV/cm und ganz besonders bevorzugt 1.5 bis 2,5 kV/cm ausbildet.

Gute Ergebnisse werden insbesondere erhalten, wenn der Innendurchmesser der Kanüle 50 bis 500 µm beträgt.

In Weiterbildung des Erfindungsgedankens wird vorgeschlagen, die Elektroden beim Elektrospinnverfahren in einem Abstand von 1 bis 50 cm und besonders bevorzugt in einem Abstand von 10 bis 20 cm anzuordnen.

Während der Nachschub der Polymerlösung durch die Kanüle vorzugsweise zwischen 0,1 und 10 ml/h, besonders bevorzugt zwischen 0,1 und 1 ml/h und ganz besonders bevorzugt zwischen 0,15 und 0,40 ml/h beträgt, beträgt die Beschichtungsdauer vorzugsweise zwischen 10 und 200 Minuten und besonders bevorzugt zwischen 40 und 110 Minuten.

Die erfindungsgemäßen hydrophoben Polymerbeschichtungen, insbesondere superhydrophoben Polymerbeschichtungen eignen sich zur Herstellung von Oberflächen für alle Arten von Alltagsgegenständen, die eine wasserabweisende Wirkung besitzen sollen, beispielsweise für Kunststoffabdeckungen und Sichtfenster. Des weiteren eignen sich die Partikel für Anwendungen, bei denen die Anhaftung von Schmutzpartikeln, Lebensmitteln, Mikroorganismen, Farben, Tinten, Harzen oder Kunststoffen verhindert werden soll. Des Weiteren weisen Oberflächen mit einer gegenüber Wasser stark erniedrigten Benetzbarkeit eine erheblich reduzierte Vereisungsneigung auf.

Aufgrund ihrer selbstreinigenden und wasserabweisenden Wirkung können die erfindungsgemäßen Polymerbeschichtungen ferner vorteilhaft in Teppichen, Nähgarn, Seilen, Wandbehangen, Textilien, Tapeten, Bekleidungsstücken, Zelten, Dekorvorhängen, Bühnenvorhängen und Nähten als Oberflächenbeschichtung eingesetzt werden. Die Polymerbeschichtungen eignen sich insbesondere zur Herstellung von Bekleidungsstücken, die hohen Belastungen durch Schmutz und Wasser ausgesetzt sind, insbesondere solche für den Skisport, Atpinsport, Motorsport, Motorradsport, Motocrosssport, Segelsport, für Textilien für den Freizeitbereich und für Arbeitsbekleidung sowie technische Textilien wie Zelte, Markisen, Regenschirme. Tischdecken und Kabrioverdecke. Die Textilien können beispielsweise in Form von Geweben, Gewirken, Vliesen oder Filzen eingesetzt werden.

Ein weiterer Anwendungsbereich der erfindungsgemäßen hydrophoben Polymerbeschichtungen sind Vorrichtungen zur Aufbewahrung von Flüssigkeiten, welche möglichst restlos von den aufbewahrten Flüssigkeiten entleert werden sollen.

Zum definierten Aufnehmen und Verteilen von Flüssigkeiten werden häufig Pipettenspitzen oder ähnliche Werkzeuge eingesetzt. Mit Hilfe dieser Pipettenspitzen können Flüssigkeiten aus einem Vorratsbehälter abgenommen oder definierte Flüssigkeitsmengen von einem Behältnis in ein anderes übertragen werden. In der Molekularbiologie, beim High Throughput-Screening oder in der kombinatorischen Chemie werden mitunter Volumina in Mikroliter- oder Nanolitermaßstab pipettiert. Allerdings können mit den heute auf dem Markt verfügbaren Pipettenspitzen nicht beliebig kleine Volumina berührungsfrei pipettiert werden, d.h. derart pipettiert werden, das sich die zu pipettierende Flüssigkeit von der Pipettenspitze selbstständig und vollständig ablöst. Mit den erfindungsgemäßen superhydrophoben Polymeroberflächen versehenen Pipettenspitzen können selbst Volumina von kleiner 500 nl berührungsfrei pipettiert werden.

Aus einem anderen technischen Gebiet, nämlich der biologisch/pharmazeutischen Industrie, ist das Problem der Verpackung von biologischen und/oder pharmazeutischen Produkten - meist in Lösung - und der vollständigen, unverdünnten Entnahme dieser Lösungen aus den Verpackungen bekannt. Typische Verpackungen sind Ampullen aus Kunststoff mit oder ohne Verschluss. Häufig werden hochwertige biologische oder pharmazeutische Produkte außerdem in sehr kleinen Mengen verpackt. Dies liegt zum einen an der hohen Wirksamkeit dieser Präparate und zum anderen am sehr hohen Preis dieser Substanzen. Volumina von weniger als 100 µl sind hierbei keine Ausnahme. Es lässt sich beobachten, dass solche Lösungen und Präparate meist nur unvollständig aus diesen Behältnissen entnommen werden können. Dies ist in vielerlei Hinsicht problematisch, z.B. weil die Entsorgung der Behältnisse nur als Sonderabfall erfolgen kann, so dass entweder weniger als die angegebene und damit meist auch verordnete Menge an Präparat verabreicht wird oder dass, um die vorgeschriebene Menge applizieren zu können, ein weiteres Behältnis geöffnet werden muss, mit dem Nachteil, dass ein größerer Rest an teurem Präparat verworfen werden muss. Auch für diese Anwendungen können die erfindungsgemäßen hydrophoben Polymerbeschichtungen, insbesondere superhydrophoben Polymerbeschichtungen, insbesondere für die Verwendung in Pipettenspitzen, Spritzen, Ampullen und Aufbewahrungsbehälter für biologisch und/oder pharmazeutische Erzeugnisse, bei denen Flüssigkeiten auf kleine Bereiche aufgeteilt werden müssen und/oder sich die Flüssigkeit auf den flüssigkeitsbenetzenden Bereichen durch leichtes Erschüttern oder durch leichte Neigung des Behälters sammelt, mit Vorteil eingesetzt werden.

Ein weiterer Anwendungsbereich für die erfindungsgemäßen Polymerbeschichtungen ist die Verwendung in Vorrichtungen für die Biotechnologie. Bakterien und andere Mikroorganismen benötigen zur Adhäsion an einer Oberfläche Wasser, welches an den superhydrophoben Oberflächen der erfindungsgemäßen Polymerbeschichtungen nicht zur Verfügung steht. Die superhydrophoben Oberflächen der erfindungsgemäßen Partikel verhindern daher das Anwachsen von Bakterien und anderen Mikroorganismen an den fiüssigkeitsabweisenden Bereichen; sie sind somit auch bakteriophob und/oder antimikrobiell. Die Oberflächen der Vorrichtungen für die Biotechnik werden entweder vollständig oder nur in Teilbereichen mit superhydrophoben Partikeln ausgestattet. Handelt es sich um eine Vorrichtung für die Biotechnologie, bei der nur ein Teil der Oberfläche mit erfindungsgemäßen superhydrophoben Partikeln ausgestattet ist, so findet ein ortsdefiniertes Wachstum von Bakterien und anderen Mikroorganismen an den benetzbaren Teilbereichen der Vorrichtungsoberfläche statt. Da der Effekt, der den superhydrophoben Teilbereichen der Vorrichtungsoberfläche zu Grunde liegt, nicht auf antimikrobiellen Wirkstoffen beruht, sondern auf einem physikalischen Effekt, ist eine Beeinträchtigung des Wachstums von Bakterien und anderen Mikroorganismen auf den wasserbenetzbaren Teilbereichen durch die wasserabweisenden Bereiche - beispielsweise durch Ausbluten und/oder Diffusion von Wirkstoffen - ausgeschlossen.

Weitere Merkmale, Einzelheiten und Vorteile der Erfindung ergeben sich aus dem Wortlaut der Ansprüche sowie aus der folgende Beschreibung von Ausführungsbeispiele anhand der Zeichnungen. Es zeigen:
- Fig. 1: eine schematische Darstellung einer zur Durchführung des erfindungsgemäßen Verfahrens geeigneten Vorrichtung,
- Fig. 2: elektronenmikroskopische Aufnahmen der in den Beispielen 2 (A), 3 (B), 6 (C), 7 (D), 8 (E), 9 (F) und 10 (G) sowie in dem Vergleictisbeispiel 1 (H) erhaltenen Polymeroberflächen und
- Fig. 3: elektronenmikroskopische Aufnahmen der in den Beispielen 11 (A) und 12 (B) sowie in den Vergleichsbeispielen 2 (C) und 3 (D) erhaltenen Polymeroberflächen

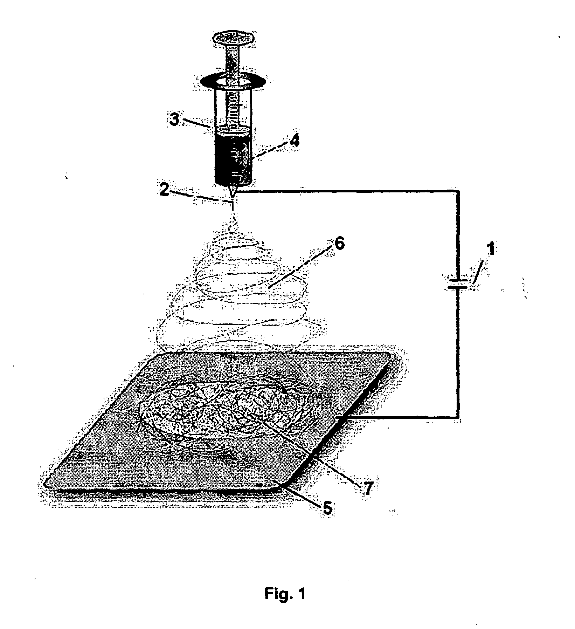

Die in der Fig. 1 dargestellte, zur Durchführung des erfindungsgemäßen Verfahrens geeigneten Vorrichtung zum Elektrospinnen umfasst eine an deren Spitze mit einer mit einem Pol einer Spannungsquelle 1 verbundenen Kapillardüse 2 versehene Spritze 3 zur Aufnahme der Polymerlösung 4. Gegenüber dem Ausgang der Kapillardüse 2 ist in einem Abstand von 10 bis 20 cm eine mit dem anderen Pol der Spannungsquelle 1 verbundene quadratisch Gegenelektrode 5 angeordnet, die als Kollektor für die gebildeten Polymeroberflächen in Form von Fasern, Partikeln oder durch Fasern miteinander verbundenen Partikeln fungiert.

Während des Betriebs der Vorrichtung wird an den Elektroden 2, 5 eine Spannung zwischen 30 kV und 50 kV eingestellt und die Polymerlösung 4 unter einem geringen Druck durch die Kapillardüse 2 der Spritze 3 ausgetragen. Aufgrund der durch das starke elektrische Feld von 1,5 bis 2,5 kV/cm erfolgenden elektrostatischen Aufladung der Polymere in der Lösung entsteht ein auf die Gegenelektrode 5 gerichteter Materialstrom der sich auf dem Wege zur Gegenelektrode 5 unter Faser- oder Partikelbildung 6 verfestigt, infolge dessen sich auf der Gegenelektrode 5 Fasern 7, durch Fasern miteinander verbundene Partikel oder Partikel mit Durchmessern im Mikro- und Nanometerbereich abscheiden.

Mit der vorgenannten Vorrichtung wird erfindungsgemäß eine Lösung wenigstens eines Homo- oder Copolymers, welches wenigstens eine Seitenkette mit wenigstens einer fluarsubstituierten Arylgruppe enthält, in einem geeigneten Lösungsmittel, wie THF/DMF (1:1 v/v), elektroversponnen.

### Synthesebeispiel 1

### (Herstellung verschiedener Homo- und Copolymere auf Basis von ggf. fluorsubstituierten Styrol)

2,3,4,5,6-Polypentafluorstyrol (PPFS) (25), Poly-4-fluorstyrol (4-FPS) (26), Polystyrol (PS) (27), ein Copolymer (28) aus 2,3,4,5,6-Pentafluorstyrol (PFS) (22) und Styrol (St) (24) sowie ein Copolymer (30) aus 2,3,4,5,6-Pentafluorstyrol (22) und 5,6-Benzo-2-methylen-1,3-dioxepan (BMDO) (29) wurden durch radikalisch Polymerisation hergestellt.

Die Herstellung von 2,3,4,5,6-Polypentafluorstyrol (PPFS) (25), Poly-4-fluorstyrol (4-FPS) (26) und Polystyrol (PS) (27) erfolgte gemäß dem nachfolgenden Reaktionsschema: 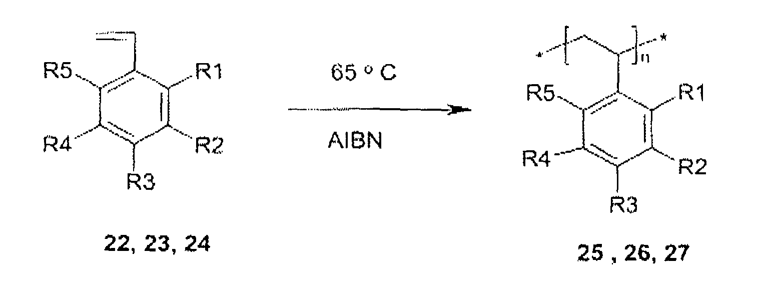 **22** = PFS ; R1 = R2 = R3 = R4 = R5 = F
**23** = 4-FS; R1 = R2 = R4 = R5 = H ; R3 = F
**24** = St ; R1 = R2 = R3 = R4 = R5 = H
**25** = PPFS ; R1 = R2 = R3 = R4 = R5 = F
**26** = 4-FPS; R1 = R2 = R4 = R5 = H ; R3 = F
**27** = PS; R1 = R2 = R3 = R4 = R5 = H

Die Herstellung des aus 2,3,4,5,6-Pentafluorstyrol (PFS) (22) und Styrol (St) (24) gebildeten Copolymers (28) sowie des aus 2,3,4,5,6-Pentafluorstyrol (22) und 5,6-Benzo-2-methylen-1,3-dioxepan (BMDO) (29) gebildeten Copolymers (30) erfolgte gemäß den nachfolgenden Reaktionsschemata:

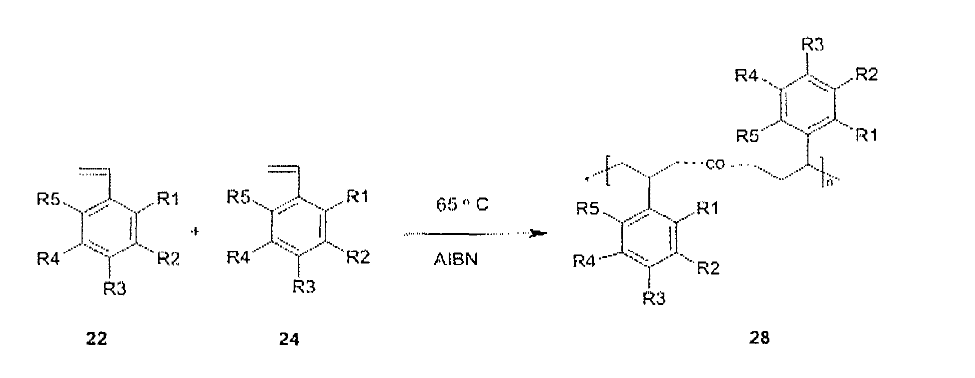

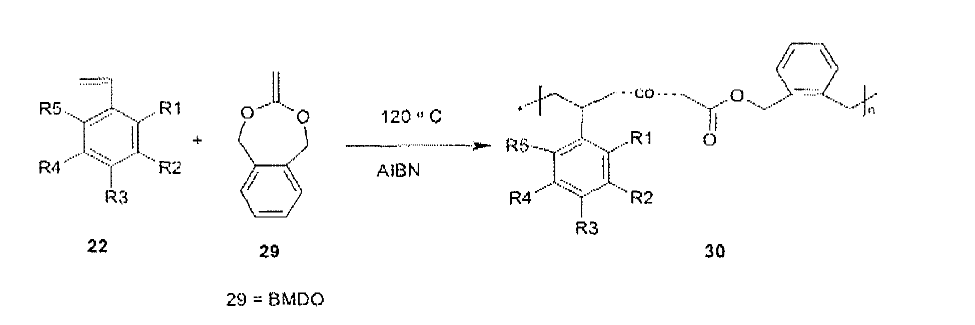

Die Homo- und Copolymerisationen wurden jeweils bei 65 °C durchgeführt, wobei als Radikalstarter Azobisisobutyronitril (AIBN) eingesetzt wurde.

Im Falle des Copolymers Poly(2,3,4,5,6-pentafluorstyrol-co-5,6-benzo-2-methylen-1,3-dioxepan) (30) wurde eine Kombination aus klassischer vinylischer und radikalischer Ringöffnungspolymerisation angewandt. Das Copolymer hatte eine Zusammensetzung von 95:5 Mol.-% PFS:BMDO.

### Reaktionsbedingungen:

Substanzpolymerisation bei 120°C; Dauer; 30 Minuten

### Charakterisierung:

PPFS (25): M_{w} = 30,000-110,000,
4-FPS (26) M_{w} = 70, 000 - 120,000,
PS (27): M_{w} = 40, 000 - 660,000,
Poly (PFS - co-St) (28): M_{w} = 100, 000 - 210,000,
Poly(PFS-co-BMDO) (30): M_{w} = 30,000-35,000.

### Synthesebeispiel 2

### (Herstellung verschiedener fluorsubstituierter Poly-p-xylylen Homopolymere)

Es wurden folgende fluorierte und nicht-fluorierte Derivate auf Basis von Poly-p-xylylen (PPX) hergestellt:

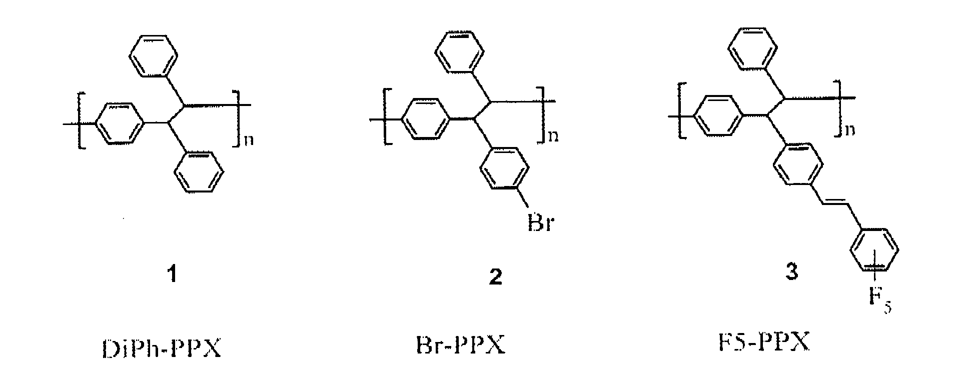

### Syntheseschema der Startmaterialien

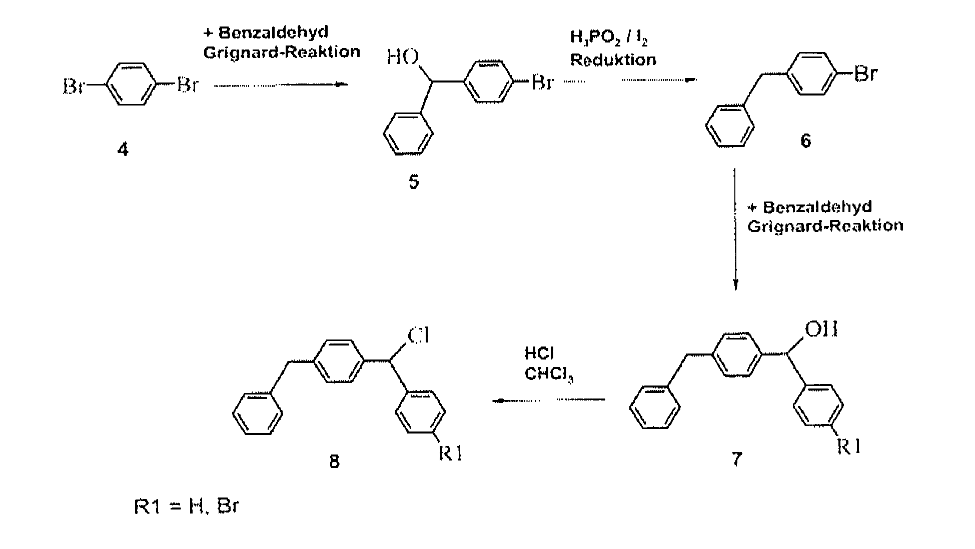

### Polymersynthese der PPX-Derivate

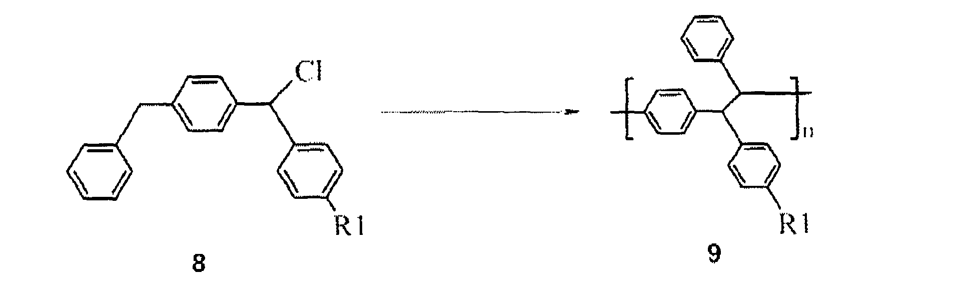

### Fluorierte PPX-Derivate durch polymeranaloge Umsetzung

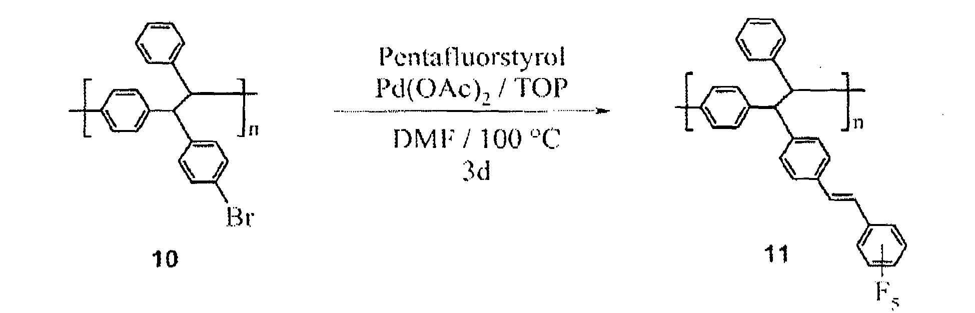

Im Folgenden werden die eingehen Schritte der Monomer- und Polymersynthesen im Detail beschrieben.

### 1. Herstellung von Brombenzhydrol (5)

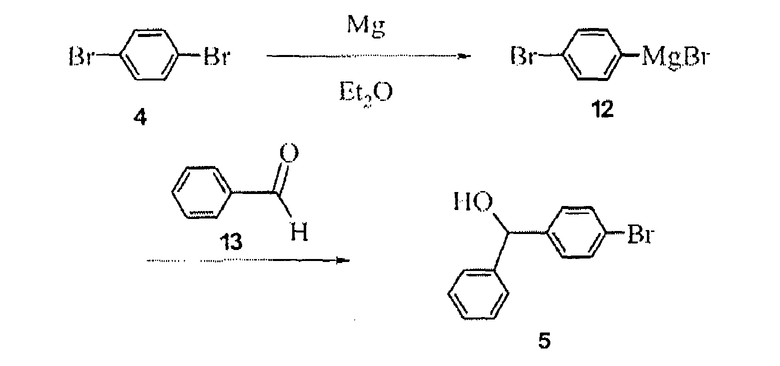

Die Herstellung des Brombenzhydrols erfolgte gemäß der von G Fraenkel, MJ Geckle, J. Am. Chem. Soc. 1980, 21, 2869-2880 beschriebenen Methode.

In einem ausgeheizten und mit Argon beschickten 2-l-Dreihalskolben mit Tropftrichter und Rückflusskühler wurden 14,6 g (600 mmol, 1,20 eq.) Magnesiumspäne in 50 ml trockenem Diethylether vorgelegt und 20 Min. gerührt. Danach wurde zur Aktivierung ein Korn Jod zugesetzt und erneut für 20 Min. gerührt. Eine Lösung von 117,0 g (500 mmol, 1.00 eq.) Dibrombenzol (4) in 500 ml Diethylether wurde zugetropft, bevor nach beendeter Zugabe des Diethylethers 1 h unter Rückfluss erhitzt wurde.

Danach wurden 47,7 g (450 mmol, 0.9 eq.) frisch destillierter Benzaldehyd (13) gelöst in 400 ml Diethylether zugetropft und erneut für 2 h unter Rückfluss erhitzt.

Zur Hydrolyse wurde das Reaktionsgemisch nach dem Abkühlen auf Raumtemperatur auf Eis gegossen und mit 1N HCl auf pH 3-4 eingestellt. Die organische Phase wurde abgetrennt und die wässrige dreimal mit je 150 ml Chloroform extrahiert. Die vereinigten organischen Phasen wurden mit 200 ml gesättigter NaHCO₃-Lösung neutralisiert und über Na₂SO₄ getrocknet. Das Lösungsmittel wurde am Rotationsverdampfer abdestilliert und das Rohprodukt 5 h im Hochvakuum bei 5x10³ mbar getrocknet.

Das nach der Reaktion erhaltene Produktverhältnis wurde durch GG-MS-Analyse an dem nachfolgend charakterisierten Gerät bestimmt
Typ: SHIMADZU, QP 5050
Säule: SE-54, 30 m
Methode: Starttemperatur: 100 °C
Heizrate: 10 °C/min
Endtemperatur: 280 °C

| **Retentionszeit/min** | **Produktmenge/%** | **Identifikation** |
|---|---|---|
| 5,62 | 0,2 | Dibrombenzol |
| 11,34 | 2,1 | Benzhydrol |
| 15,09 | 86,3 | **4-Brombenzhydrol (5)** |
| 21,98 | 11,4 | α,α-Dihydroxydiphenyl-p-xylol |

Das so erhaltene Produktgemisch wurde ohne weitere Reinigung und Charakterisierung in dem nächsten Syntheseschritt reduziert.

### 2. Darstellung von 4-Bromdiphenylmethan (6)

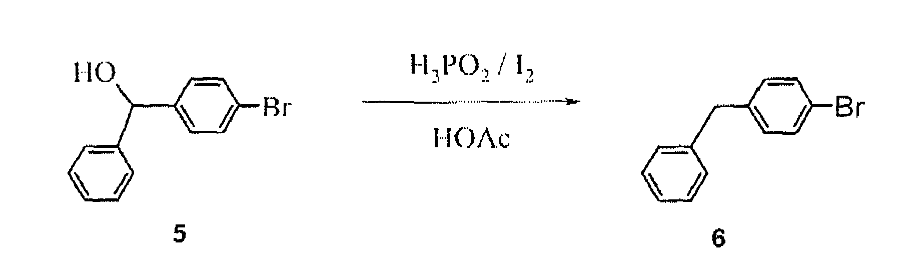

Die Herstellung des 4-Bromdiphenylmethans erfolgte gemäß der in PE Gordon, AJ Fry, Tetrahedron Lett. 2001, 42, 831-833 beschriebenen Methode.

In einem mit Argon beschickten 1-l-Dreihalskolben mit Rückflusskühler und Innenthermometer wurde das oben erhaltene 4-Brombenzhydrol (5) in 500 ml Eisessig gelöst und mit 113 g (445 mmol) Jod und 226 ml 50%iger unterphosphoriger Säure (2,2 mol) versetzt. Die Mischung wurde für 24 h auf 78-82 °C erwärmt.

Nach Abkühlen auf Raumtemperatur wurde das Reaktionsgemisch in ca. 700 ml Eiswasser gegossen und fünfmal mit je 200 ml Hexan extrahiert. Die vereinigten organischen Phasen wurden so lange mit 10%iger KOH-Lösung gewaschen, bis ein Säure-Base-Indikalor, dessen Umschlagsbereich im pH-Bereich zwischen 6 und 8 lag, keine saure Reaktion der wässrigen Phase mehr anzeigte. Danach wurde einmal mit 200 ml gesättigter Ammoniumchlorid-Lösung und zweimal mit gesättigter Na₂SO₃-Lösung gewaschen. Das Lösungsmittel wurde am Rotationsverdampfer abdestilliert und das Rohprodukt im Hochvakuum bei 5x10⁻³ mbar destilliert.
Ausbeute: 68 g (276 mmol, 61 %)
Siedetemperatur.: 103 °C (bei 5x10⁻³ mbar)

### 3. Herstellung von 4-Benzylbenzhydrol (16) und 4-Benzyl-4'-brombenzhydrol (17)

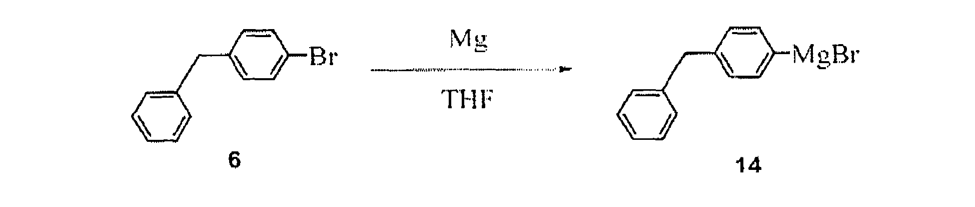

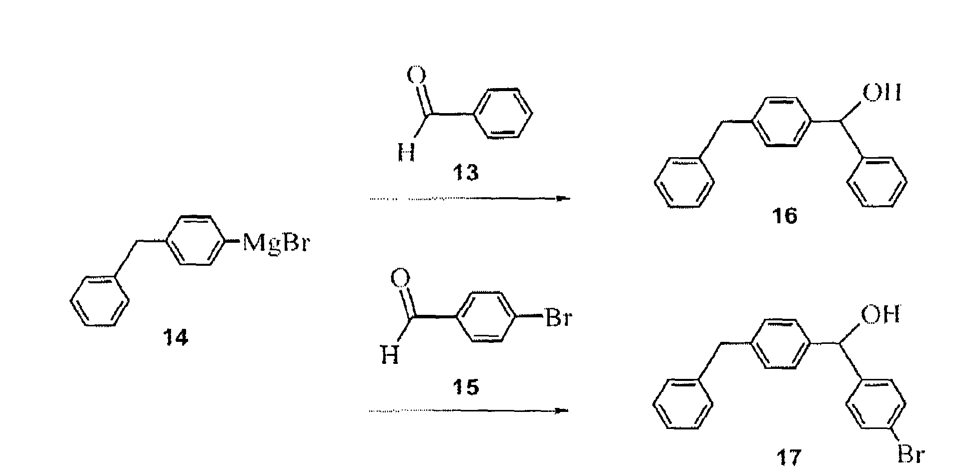

In einem ausgeheizten und mit Argon beschickten 500-ml-Dreihalskolben mit Tropftrichter und Rückflusskühler wurden 3,04 g (125 mmol, 1,25 eq.) Magnesiumspäne in 25 ml trockenem THF vorgelegt und mit zwei Tropfen 1,2-Dibromethan aktiviert. Eine Lösung von 29.6 g (120 mmol, 1,20 eq.) 4-Bromdiphenylmethan (6) in 60 ml THF wurde zugetropft. Nach erfolgter Zugabe wurde 1 h unter Rückfluss erhitzt.

Danach wurde 100 mmol (1,00 eq.) des jeweiligen Aldehyds (13) bzw. (15) gelöst in 70 ml THF zugetropft und erneut 2 h unter Rückfluss erhitzt.

Zur Hydrolyse wurde das Reaktionsgemisch nach dem Abkühlen auf Raumtemperatur auf Eis gegossen und mit 1 N HCl auf pH 3-4 eingestellt. Die organische Phase wurde abgetrennt, die wässerige dreimal mit je 70 ml Chloroform extrahiert. Die vereinigten organischen Phasen wurde mit 100 ml gesättigter NaHCO₃-Lösuny neutralisiert und über Na₂SO₄ getrocknet. Das Lösungsmittel wurde am Rotationsverdampfer abdestilliert und das Rohprodukt 5 h im Hochvakuum bei 5x10⁻³ mbar getrocknet. Das Rohprodukt wurde in Chloroform aufgelöst und über Kieselgel G60 filtriert. Danach wurde aus Lösungsmittel abdestilliert und das vorgereinigte Produkt aus Hexan/Chloroform-Geniiscli (8:2 v/v) umkristattisiert.
Ausbeuten: 4-Benzylbenzhydrol (16): 23,6 g (86 mmol, 86 %)
   4-Benzyl-4'-brombenzhydrol (17): 26,5 g (75 mmol. 75 %)

### 4. Chlorierung mit HCl

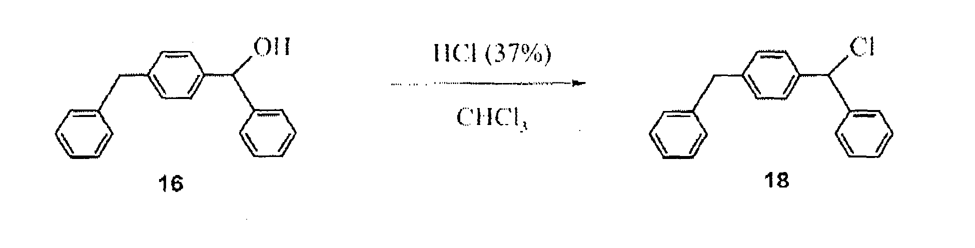

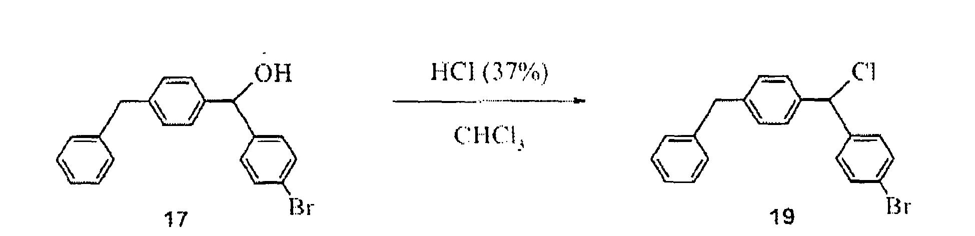

In einem 250-ml-Dreihalskolben mit Tropftrichter und Rückflusskühler wurden 62 mmol des jeweiligen Alkohols (16) bzw. (17) in 100 ml Chloroform gelöst und auf 0 "C abgekühlt. Zu dieser Lösung wurden 60 ml konz. Salzsäure (37 % p.a.) zugetropft und nach beendeter Zugabe für 20 Min. bei 0 °C gerührt. Danach wurde für 1 h unter Rückfluss erhitzt.

Nach Abkühlung auf Raumtemperatur wurde die organische Phase abgetrennt und die wässrige Phase dreimal mit Chloroform extrahiert. Die vereinigten organischen Phasen wurden mit gesättigter NaHCO₃-Lösung neutralisiert und über Na₂SO₄ getrocknet. Das Lösungsmittel wurde abdestilliert und das Rohprodukt aus Hexan/Chioroform (8:2 V/V) umkristatiisiert.
- Ausbeuten:: 1-Benzyl-4-(chlorophenyl-methyl)-berizol (18): 16,1 g (55 mmol, 88 %)
1-Benzyl-4-[chloro-4-bromphenyl)methyl]-benzol (19):
20,1 g (54 mmol, 87 %)

### 5. Herstellung von Diph-PPX und Br-PPX durch Gilch-Reaktion

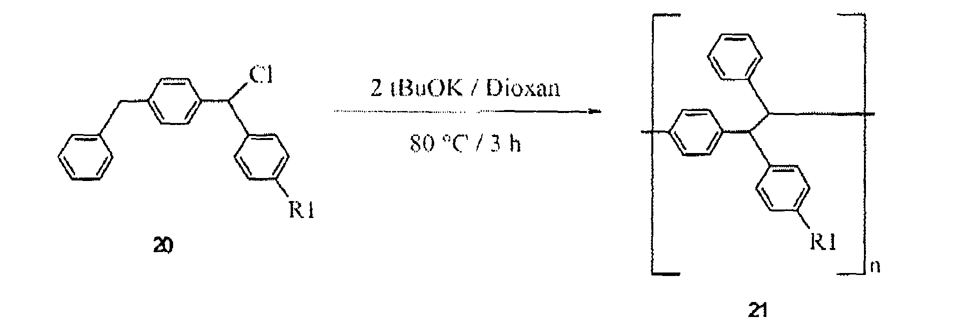

R1 = H, Br
Im Falle von R1 = H ergibt sich DiPh-PPX (1),
im Falle von R1 = Br handelt es sich um Br-PPX (2).

Die Gilch-Polymerisation wurde unter strengem Ausschluss von Sauerstoff durchgeführt. Des verwendete Lösungsmittel 1,4-Dioxan wurde über Kalium/Benzophenon getrocknet. Alle Lösungen wurden dreimal entgast.

2,0 eq. Kaliumtertiärhutanolat wurden in einem dipolar, aprotischen Lösungsmittel zu einer 0,2 molaren Lösung gelöst und zum Sieden erhitzt. Danach wurde innerhalb von 3-5 sec 1,0 eq. des Chlorids gelost im gleichen Lösungsmittel (Konzentration: 0,7 mol/l) zugegeben. Das Reaktionsgemisch wurde 3 h unter Rückfluss erhitzt und danach in die zehnfache Menge Methanol gegossen, wobei das entstandene Polymer ausfiel. Dieses wurde abfiltriert, getrocknet, danach in soviel Chloroform gelöst, dass eine 10%-ige Lösung entstand und erneut aus der zehnfachen Menge Methanol umgefällt. Das gereinigte Produkt wurde bei 60-80 °C und 20 mbar bis zur Gewichtskonstanz getrocknet.

Als Lösungsmittel wurde Dioxan verwendet.

### Ausbeute:

| | |
|---|---|
| Diph-PPX (1): | 1.68 g (6.6 mmol; 81 % d. Th.) |
| BR-PPX (2): | 2.11 g (6.3 mmol; 78 % d. Th.) |

### GPC:

| | | | |
|---|---|---|---|
| Diph-PPX (1) | M_{w}: 291800 | Mₙ: 127600 | D: 2.29 |
| Br-PPX (2) | M_{w}: 263100 | Mₙ: 117500 | D: 2.24 |

### 6. Herstellung von F5-PPX

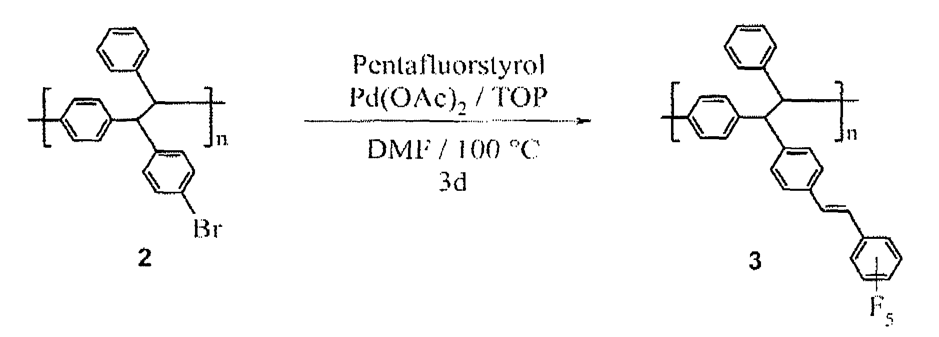

Die Herstellung von F5-PPX (3) erfolgte durch polymeranaloge Umsetzung von Poly-(α-4-bromphenyl-α-phenyl)-PX mit 2,3,4,5,6-Pentafluorstyrol in einer Heckreaktion.

1.00 eq. Br-Diph-PPX wurden in einem dipolaren, aprotischen Lösungsmittel zu einer 0.05 molaren Lösung gelöst. Danach wurden 3,00 eq. Pentafluorstyrol, 1,1 eq. Tributylamin. 0,06 eq. Tri-o-tolylphoaphin, 0,01 eq. Palladium(II)acetat und 0,06 eq. Hydrochinon zugesetzt und unter Rühren gelöst. Das Reaktionsgemisch wurde dreimal entgast, mit Argon gesättigt und 3 Tage bei 100 °C gerührt.

Nach Abkühlen auf Raumtemperatur wurde die Lösung über Kieselgel G60 filtriert. Danach wurden 30 ml Toluol zugesetzt und mit je 60 ml 2N-Salzsäure, 5%iger KOH-Lösung und Wasser extrahiert. Nach Trocknung über Na₂SO₄ wurde das Lösungsmittel im Hochvakuum abdestilliert und das Produkt aus DMF/MeOH umgefällt.

### Charakterisierung:

### Molekulargewichte:

Mw: 550000 Mn: 125000 D: 4.4

### Thermoanalytik:

T_{5%}: 372 °C
T_{g}: 233 °C

### Beispiele 1 bis 10 (erfindungsgemäß)

### Vergleichsbeispiel 1 (nicht erfindungsgemäß)

Verschiedene gemäß Synthesebeispiel 1 hergestellte Copolymere aus Styrol und 2,3,4,5,6-Pentafluorstyrol mit den in der Tabelle 1 wiedergegebenen Mengenverhältnissen der beiden Monomere zueinander sowie Homopolymere aus Poly-2,3,4,5,6-pentafluorstyrol und Polystyrol wurden jeweils in THF:DMF (1:1 v/v) gelöst, wobei die Polymerkonzentration jeder Lösung 2 bis 10 Gew.-% betrug. Gleichermaßen wurde Poly-4-fluorslyrol bzw, ein Copolymer aus 2,3,4,5,6-Pentafluorstyrol und BMDO in Lösung gebracht.

Anschließend wurden die Lösungen unter den nachfolgend zusammengefassten Bedingungen elektroversponnen, wobei als Gegenelektrode jeweils eine Aluminium beschichtete PET-Folie eingesetzt wurde.

### Spinnbedingungen:

Spannung: 30-50 kV
Elektrodenabstand: 10 - 20 cm
Durchmesser der Düse: 0,3 mm
Nachschub der Polymerlösung: 0.15 - 0,40 ml/h
Beschichtungsdauer: 40 - 110 min

Die Morphologie der so erhaltenen Polymeroberflächen wurde mit scannender Elektronenmikroskopie (SEM) bestimmt.

Zudem wurde der Abrollwinkel der verschiedenen eingesetzten Homo- und Copolymer mit folgender Apparatur gemessen:

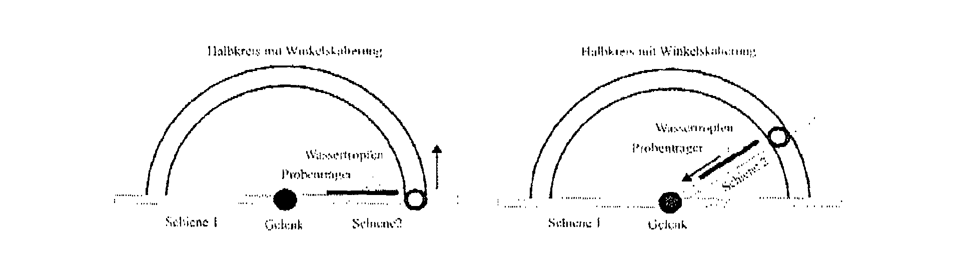

Die beiden Metallschienen sind über ein Gelenk verbunden und können innerhalb des Halbkreises mit Winkelskalierung bewegt werden. Zur Messung des Abrollwinkels wurde der elektrobesponnene Probenträger mit Klebeband auf der Schiene 2 befestigt und die Apparatur auf einen glatten, ebenen Untergrund gestellt. Mit einer Spritze wurde ein Wassertropfen auf das Substrat abgelegt und die Schiene 2 langsam angehoben. Der Abrollwinkel, unter dem der Wassertropfen von der Unterlage rutschte, wurde von einer Skala abgelesen.

Die Morphologie der in den Beispielen 1 bis 10 und dem Vergleichsbeispiel 1 erhaltenen Polymeroberflächen sowie die Abrollwinkel der Polymeroberflächen sind in den Tabetten 1 und 2 zusammengefasst.

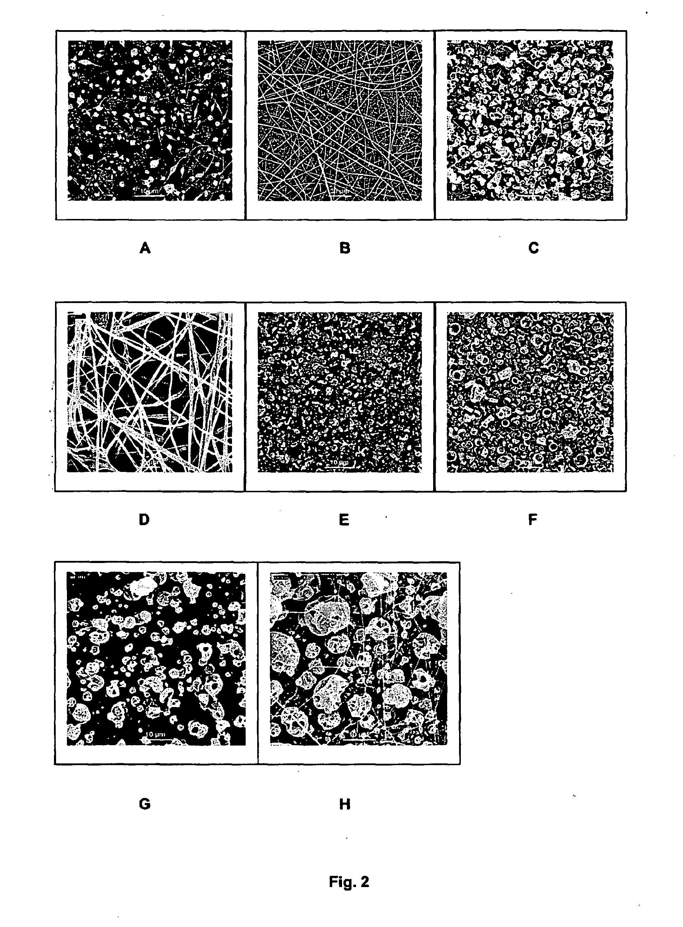

Zudem sind etektronenmikroskopische Aufnahmen einzelner in den vorgenannten Beispielen erhaltenen Polymeroberflächen in den Fig. 2 A bis H wiedergegeben, wobei die Zuordnung der Figuren zu den einzelnen Beispielen und die konkreten in den einzelnen in der Fig. 2 dargestellten Beispiele eingesetzten Elektrospinnbedingungen nachfolgend wiedergegeben sind:

| **Figur** | **Beispiel** | **Polymer konzentration** | **Elektrospinnbedingungen** | | | |
|---|---|---|---|---|---|---|
| | | (Gew.-%) | Spannung | Elektroden abstand | Polymernachschub | Beschichtungsdauer |
| | | | (kV) | (cm) | (ml/h) | (Min.) |
| 2 A | 2 | 2 | 40 | 18 | 1,0 | 50 |
| 2 B | 3 | 10 | 40 | 18 | 1,0 | 50 |
| 2 C | 6 | 2 | 40 | 18 | 0,7 | 50 |
| 2 D | 7 | 10 | 15 | 18 | 10,7 | 50 |
| 2 E | 8 | 10 | 40 | 18 | 0,7 | 50 |
| 2 F | 9 | 2 | 30 | 18 | 0,7 | 50 |
| 2 G | 10 | 10 | 50 | 18.5 | 0,34 | 50 |
| 2 H | Vbsp.1 | 2 | 30 | 20 | 0,35 | 40 |

| | | | | | | |
|---|---|---|---|---|---|---|
| Vbsp.: Vergleichsbeispiel | | | | | | |

Wie aus den Tabelle 1 und 2 ersichtlich werden mit Poly-2,3,4,5,6-pentafluorstyrol (Beispielen 6 bis 8), Poly-4-fluorstyrol (Beispiel 9) und den Copolymeren aus Pentafluorstyrol und Styrol (Beispielen 1 bis 5) bzw. aus 2.3,4.5,6-Pentafluorstyrol und 5,6-Benzo-2-methylen-1,3-dioxepan (Beispiel 10) jeweils hydrophobe polymeroberfluchen mit einem Abrollwinkel von weniger als 40° erhalten, wohingegen die mit Polystyrol (Vergleichsbeispiel 1) hergestellte Oberfläche mit einem Abrollwinkel von mehr als 90" hydrophil ist.

**Tab. 1: PS/PFS-Copolymere, Morphologien nach dem Elektrospinnen sowie Abrollwinkel mit Wasser**

| **Beispiel** | **Formel** | **Zusammensetzung (Co)polymers des (Mol-%)** | | **Morphologie der Oberfläche** | **Abrollwinkel (Grad)** |
|---|---|---|---|---|---|
| | | **PS** | **PFS** | | |
| Beispiel 1 | 28a | 80 | 20 | durch Fasern verbundene Partikel | 30-40 |
| Beispiel 2 | 28b | 70 | 30 | durch Fasern verbundene Partikel | 0 |
| Beispiel 3 | 28c | 70 | 30 | Fasern | 30-40 |
| Beispiel 4 | 28d | 65 | 35 | durch Fasern verbundene Partikel | 0 |
| Beispiel 5 | 28e | 50 | 50 | durch Fasern verbundene Partikel | 0 |
| Beispiel 6 | 25 | 0 | 100 | durch Fasern verbundene Partikel | 0 |
| Beispiel 7' | 25a | 0 | 100 | Fasern | 20-30 |
| Beispiel 8" | 25b | 0 | 100 | Partikel | 0 |
| Vergleichsbeispiel 1 | 27 | 100 | 0 | durch Fasern verbundene Partikel | > 90 |

| | | | | | |
|---|---|---|---|---|---|
| PS Polystyrol PFS 2,3,4,5,6-Polypentafluorstyrol * Eloktroverspinnen in einem elektrischen Feld von 0,83 kV/cm ** Elektroverspinnen in einem elektrischen Feld von 2,22 kV/cm | | | | | |

**Tab. 2: Hydrophobie von 4-FPS/Poly(PFS-co-BMDO)**

| **Beispiel** | **Formel** | **Eingesetztes Polymer** | **Morphologie der Oberfläche** | **Abrollwinkel (Grad)** |
|---|---|---|---|---|
| 9 | 26 | Poly-4-fluorstyrol | Partikel | 0 |
| 10 | 30 | Copolymer aus PFS und BMDO | Partikel | 0 |

| | | | | |
|---|---|---|---|---|
| PFS 2,3,4,5,6-Polypentafluorstyrol BMDO 5,6Benzo-2-m3thylen-1,3-dioxepan | | | | |

Aus den Ergebnisse geht zudem hervor, dass Copolymere aus PFS und PS einen superhydrophoben Effekt mit Abrollwinkeln von 0° aufweisen, wenn der Anteil des PFS, bezogen auf das Polymer, mindestens 30 Molprozent beträgt und die Polymeroberfläche nach dem Elektroverspinnen aus Partikeln mit einem mittleren Durchmesser von 2 um bis 3 µm oder untereinander mit Fasern verbundenen Partikeln mit einem mittleren Durchmesser von 2 µm bis 3 µm besteht (Beispiele 2, 4 und 5). Die Messung des Kontaktwinkels mit Wasser war für diese Oberflächen auf Grund der Superhydrophobie nicht möglich, da es nicht möglich war, auf diesen Oberflächen einen Wassertropfen zu platzierten.

### Beispiele 11 und 12 (erfindungsgemäß)

### Vergleichsbeispiele 2 und 3 (nicht erfindungsgemäß)

Verschiedene gemäß Synthesebeispiel 2 hergestellte Homopolymere aus DiPh-PPX (1), Br-PPX (2) und F5-PPX (3) wurden jeweils in THF:DMF (1:1 v/v) mit den in der Tabelle 3 wiedergegebenen Polymerkonzentrationen gelöst.

Anschließend wurden die Lösungen unter den nachfolgend zusammengefassten Bedingungen elektroversponnen, wobei als Gegenelektrode jeweils eine Aluminium beschichtete PET-Folie eingesetzt wurde.

| **Beispiel** | **Etektrospinnbedtngungen** | | | | |
|---|---|---|---|---|---|
| | Spannung | Düsendurchmesser | Elektrodenabstand | Polymernachschub | Beschichtungsdauer |
| | (kV) | (mm) | (cm) | (ml/h) | (Min.) |
| 11 | 50 | 0,3 | 18,5 | 0,17 | 30 |
| 12 | 50 | 0,3 | 18,5 | 0,17 | 105 |
| Vbsp.2 | 50 | 0,3 | 12 | 0,17 | 105 |
| Vbsp.3 | 50 | 0,3 | 12 | 0,17 | 105 |

| | | | | | |
|---|---|---|---|---|---|
| Vbsp.: Vergleichsbeispiel | | | | | |

Die Morphologie der so erhaltenen Polymeroberflächen wurde mit scannender Elektronenmikroskopie (SEM) bestimmt. Zudem wurde der Kontaktwinkel nach DIN EN 828 sowie der Abrollwinkel wie in den Beispielen 1 bis 10 bestimmt.

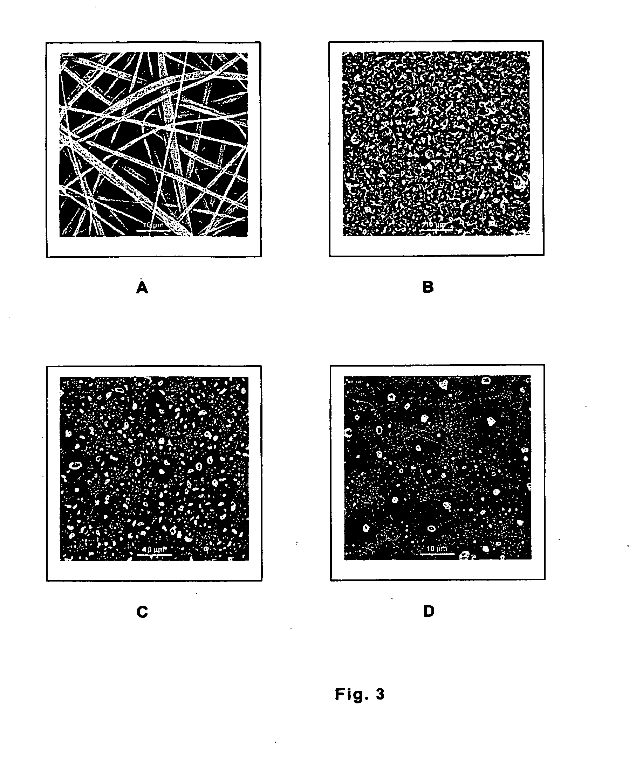

Die Morphologie sowie die Kontakt-/Abrollwinkel der in den Beispielen 11 und 12 sowie den Vergleichsbeispielen 2 und 3 erhaltenen Polymeroberflächen sind in der Tabelle 3 zusammengefasst. Zudem sind die elektronenmikroskopischen Aufnahmen der in den vorgenannten Beispielen erhaltenen Polymeroberflächen in den Fig. 3 A bis D wiedergegeben.

Wie aus der Tabelle 3 ersichtlich werden mit F5-PPX (3) signifikant hydrophobere Polymeroberflächen erhalten als mit Br-PPX (2) und DiPh-PPX (1).

**Tab. 3: PPX-Derivate, Morphologien und Hydrophobie nach dem Elektrospinnen**

| **Beispiel** | **Formel** | **Konzentration Polymerlösung (Gew.-%)** | **Morphologie der Produkte** | **Kontaktwinkel (Grad)** | **Abrollwinkel (Grad)** |
|---|---|---|---|---|---|
| Beispiel 11 | 3 | 10 | Faser | 140 ± 3 | 30 - 40 |
| Beispiel 12 | 3 | 2 | Partikel | 160 ± 3 | 0 |
| Vergleichsbeispiel 2 | 2 | 2 | Partikel | 116 ± 4 | > 90 |
| Vergleichsbeispiel 3 | 1 | 2 | Partikel | 101 ± 0,3 | > 90 |

Aus den Ergebnisse geht zudem hervor, dass Oberflächen aus F5-PPX in Partikelform (Fig. 2B), die durch Elektroverspinnen einer 2 gew. %-igen Polymerlösung erhalten werden, einen superhydrophoben Effekt mit Abrollwinkeln von 0° und einem Kontaktwinkel von 160º aufweisen. Polymeroberflächen aus F5-PPX in Faserform (Fig. 2A), die durch Elektroverspinnen einer 10 gew.-%-igen Polymerlösung erhalten werden, weisen zwar mit Kontaktwinkeln von 140° und Abrollwinkeln von 30 bis 40º immer noch hervorragende Hydrophobizitätswerte auf, sind jedoch nicht superhydrophob.

Sämtliche aus den Ansprüchen, der Beschreibung, den Zeichnungen und Ausführungsbeispielen hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Spannungsquelle
- 2: Kapillardüse
- 3: Spritze
- 4: Polymerlösung
- 5: Gegenelektrode
- 6: Faserbildung
- 7: Fasermatte

## Patentansprüche

1. Hydrophobe Polymeroberfläche enthaltend wenigstens ein Homo- oder Copolymer, welches wenigstens eine Seitenkette umfassend wenigstens eine fluorsubstituierte Arylgruppe aufweist, **dadurch gekennzeichnet,**
■ **dass** die Polymeroberfläche durch das Elektrospinnverfahren hergestellt ist,
■ wobei die Polymeroberfläche in Form von Partikeln oder von durch Fasern verbundenen Partikeln ausgebildet ist und,
■ wobei die Oberfläche in Wasser einen Kontaktwinkel von wenigstens 160° aufweist.

2. Potymeroberfläche nach Anspruch 1, **dadurch gekennzeichnet, dass** die wenigstens eine fluorsubstituierte Arylgruppe eine Mono-, Di-, Tri-, Tetra- oder Pentafluorphenylgruppe ist.

3. Polymeroberfläche nach Anspruch 1 oder 2, **dadurch gekennzeichnet, dass** die wenigstens eine fluorsubstituierte Arylgruppe eine 2,3,4,5,6-Pentafluorphenyl-, 2-Fluorphenyl-, 3-Fluorphenyl- oder 4-Fluorphenylgruppe ist.

4. Polymeroberfläche nach einem der vorhergehenden Ansprüche, **dadurch gekennzeichnet, dass** die wenigstens eine fluorsubstituierte Arylgruppe über eine Spacergruppe, bevorzugt über eine C₁-C₂₀-Alkylgruppe, besonders bevorzugt über eine C₁-C₅-Alkylgruppe und besonders bevorzugt über eine Methylen- oder Ethylengruppe, oder höchst bevorzugt direkt an die Polymerhauptkette kovalent gebunden ist.

5. Polymeroberfläche nach einem der vorhergehenden Ansprüche, **dadurch gekennzeichnet, dass** das wenigstens eine Homo- oder Copolymer wenigstens 10 Mol.-%, bevorzugt wenigstens 20 Mol.-%, besonders bevorzugt wenigstens 30 Mal.-% und ganz besonders bevorzugt 30 bis 70 Mol.-% fluorsubstituierte Arylgruppen umfasst.

6. Polymeroberfläche nach einem der vorhergehenden Ansprüche, **dadurch gekennzeichnet, dass** das wenigstens eine Homopolymer ein aus der aus Poly-2,3,4,5,6-pentafluorstyrol, Poly-2-fluorstyrol, Poly-3-fluorstyrol, Poly-4-fluorstyrol, F5-PPX sowie Homopolymeren von 2-fluoraryl-/3-fluoraryl-/4-fluoraryl-/ und 2,3,4,5,6-pentafluorarylsubstituerten Vinylmonomeren bestehenden Gruppe ausgewähltes Polymer ist.

7. Polymeroberfläche nach einem der Ansprüche 1 bis 6, **dadurch gekennzeichnet, dass** das wenigstens eine Copolymer aus einem aus der aus 2,3,4,5,6-Pentafluorstyrol, 2-Fluorstyrol, 3-Fluorstyrol, 4-Fluorstyrol, F5-PPX und Kombinationen hiervon bestehenden Gruppe ausgewählten Monomer und einem aus der aus Styrol, substituierten Styrol-Derivaten, 5,6-Benzo-2-methylen-1,3-dioxepan, Methylmethacrylat, N-Phenylmaleimid und Kombinationen hiervon bestehenden Gruppe ausgewählten Monomer besteht.

8. Polymeroberfläche nach einem der vorhergehenden Anspruche, **dadurch gekennzeichnet, dass** das wenigstens eine Homo- oder Copolymer ein gewichtsgemitteltes Molekulargewicht von 1.000 bis 2000.000 g/mol, bevorzugt von 10.000 bis 1.000.000 g/mol und besonders bevorzugt von 50.000 bis 300.000 g/mol aufweist.

9. Polymeroberfläche nach einem der vorhergehenden Ansprüche, **dadurch gekennzeichnet, dass** die Partikel der Polymeroberfläche einen mittleren Durchmesser von weniger als 3 µm, bevorzugt zwischen 1 nm und 2 µm und besonders bevorzugt zwischen 500 nm und 1 µm aufweisen.

10. Polymeroberfläche nach einem der vorhergehenden Ansprüche, **dadurch gekennzeichnet, dass** die Oberfläche einen Abrollwinkel von maximal 50°, bevorzugt von maximal 40° und besonders bevorzugt von 0" aufweist.

11. Verfahren zur Herstellung einer hydrophoben Polymeroberfläche nach einem der Ansprüche 1 bis 10, **dadurch gekennzeichnet, dass** eine Lösung enthaltend wenigstens ein Homo- oder Copolymer, welches wenigstens eine Seitenkette umfassend wenigstens eine fluorsubstituierte Arylgruppe aufweist, elektroversponnen wird.

12. Verfahren nach Anspruch 11, **dadurch gekennzeichnet, dass** eine Lösung des wenigstens einen Homo- oder Copolymers in einem aus der aus Tetrahydrofuran, Dimethylformamid, Trichlormethan und Kombinationen hiervon bestehenden Gruppe ausgewählten Lösungsmittel, und bevorzugt in einer Mischung aus Tetrahydrofuran und Dimethylformamid elektroversponnen wird.

13. Verfahren nach Anspruch 12, **dadurch gekennzeichnet, dass** die Lösung 0,5 bis 20 Gew.-%, bevorzugt 1 bis 10 Gew.-%, besonders bevorzugt 1 bis 5 Gew.-% und ganz besonders bevorzugt 2 Gew.-% Homo- und/oder Copolymer enthält.

14. Verwendung einer hydrophoben Polymeroberfläche nach einem der Ansprüche 1 bis 10 als wasserabweisende Beschichtung, insbesondere in Teppichen, Nähgarn, Seilen, Wandbehängen, Textilien, Tapeten, Bekleidungsstücken, Zelten, Dekorvorhängen, Bühnenvorhängen, Nähten, Pipettenspitzen, Ampullen, Spritzen und anderen Aufbewahrungsbehättern für biologische und pharmazeutische Erzeugnisse, und/oder als antimikrobielle und/oder bakteriophobe Beschichtung.

## Claims

1. Hydrophobic polymer surface comprising at least one homo- or copolymer which comprises at least one fluoro-substituted aryl group, **wherein**
• the polymer surface is produced by the electrospinning method,
• the polymer surface is realised in the form of particles or particles bound through fibres and
• the surface comprises a contact angle of at least 160° in water.

2. Polymer surface according to claim 1, **wherein** the at least one fluoro-substituted aryl group is a mono-, di-, tri-, tetra- or pentafluorophenyl group.

3. Polymer surface according to claim 1 or 2, **wherein** the at least one fluoro-substituted aryl group is a 2,3,4,5,6-pentafluorophenyl-, 2-fluorophenyl-, 3-fluorophenyl- or 4-fluorophenyl group.

4. Polymer surface according to one of the previous claims, **wherein** the at least one fluoro-substituted aryl group is covalently bound via a spacer group, preferably via a C₁-C₂₀ alkyl group, particularly preferably via a C₁-C₅ alkyl group and particularly preferably via a methylene or ethylene group, or, of the highest preference, directly to the primary polymer chain.

5. Polymer surface according to one of the previous claims, **wherein** the at least one homo- or copolymer comprises at least 10 mol-%, preferably at least 20 mol-%, particularly preferably at least 30 mol-% and very particularly preferably 30 to 70 mol-% fluoro-substituted aryl groups.

6. Polymer surface according to one of the previous claims, **wherein** the at least one homopolymer is a polymer selected from the group comprising poly-2,3,4,5,6-pentafluorostyrene, poly-2-fluorostyrene, poly-3-fluorostyrene, poly-4-fluorostyrene, F5-PPX, as well as homopolymers of 2-fluoroaryl-/3-fluoroaryl-/4-fluoroaryl-/ and 2,3,4,5,6-pentafluoroaryl-substituted compounds.

7. Polymer surface according to one of the claims 1 to 6, **wherein** the at least one copolymer comprises a monomer selected from the group comprising 2,3,4,5,6-pentafluorostyrene, 2-fluorostyrene, 3-fluorostyrene, 4-fluorostyrene, F5-PPX and combinations thereof and a monomer selected from the group comprising styrene, substituted styrene derivatives, 5,6-benzo-2-methylene-1,3-dioxepane, methyl methacrylate, N-phenylmaleimide and combinations thereof.

8. Polymer surface according to one of the previous claims, wherein the at least one homo- or copolymer comprises a weight-averaged molecular weight of 1,000 to 2,000,000 g/mol, preferably of 10,000 to 1,000,000 g/mol and particularly preferably of 50,000 to 300,000 g/mol.

9. Polymer surface according to one of the previous claims, wherein the particles of the polymer surface comprise an average diameter of less than 3 µm, preferably between 1 nm and 2 µm and particularly preferably between 500 nm and 1 µm.

10. Polymer surface according to one of the previous claims, wherein the surface comprises a water-roll angle of maximally 50°, preferably of maximally 40° and particularly preferably of 0°.

11. Method for the production of a polymer surface according to one of the claims 1 to 10, wherein a solution comprising at least one homo- or copolymer, which comprises at least one side chain comprising at least one fluoro-substituted aryl group, is electrospun.

12. Method according to claim 11, wherein a solution of the at least one homo- or copolymer is electrospun in a solvent selected from the group comprising tetrahydrofuran, dimethylformamide, trichloromethane and combinations thereof, and preferably in a mixture of tetrahydrofuran and dimethylformamide.

13. Method according to claim 12, wherein the solution comprises 0.5 to 20 wt.-%, preferably 1 to 10 wt.-%, particularly preferably 1 to 5 wt.-% and very particularly preferably 2 wt.-% homo- and/or copolymer.

14. Use of a hydrophobic polymer surface according to one of the claims 1 to 10 as a water-repellent coating, in particular in carpets, threads, cords, wall hangings, textiles, wallpapers, clothes, tents, decor curtains, stage curtains, seams, pipette tips, ampullae, syringes and other storage containers for biological and pharmaceutical products, and/or as an antimicrobial and/or bacteriophobic coating.

## Revendications

1. Surface polymère hydrophobe contenant au moins un homo- ou copolymère, lequel présente au moins un groupe aryle fluoro-substitué, **caractérisé par le fait**
• **que** la surface polymère est fabriquée par le procédé d'électrofilage
• où la surface polymère est conçue sous forme de particules ou de particules liées par fibres et
• où la surface présente dans l'eau un angle de contact d'au moins 160°.

2. Surface polymère selon la revendication 1, **caractérisée en ce que** l'au moins un groupe aryle fluoro-substitué est un groupe mono-, di-, tri-, tétra- ou pentafluorophényle.

3. Surface polymère selon la revendication 1 ou 2, **caractérisée en ce que** l'au moins un groupe aryle fluoro-substitué est un groupe 2,3,4,5,6-pentafluorophényle, 2-fluorophényle, 3-fluorophényle ou 4-fluorophényle.

4. Surface polymère selon l'une des revendications précédentes, **caractérisée en ce que** l'au moins un groupe aryle fluoro-substitué est lié de manière covalente par l'intermédiaire d'un groupe espaceur, de façon préférée par l'intermédiaire d'un groupe alkyle C₁-C₂₀, de façon plus préférée par l'intermédiaire d'un groupe alkyle C₁-C₅ et de façon plus préférée par l'intermédiaire d'un groupe méthylène ou éthylène, ou, de façon particulièrement préférentielle, directement à la chaîne principale de polymères.

5. Surface polymère selon l'une des revendications précédentes, **caractérisée en ce que** l'au moins un homo- ou copolymère comprend au moins 10 mol-%, de façon préférée au moins 20 mol-%, de façon plus préférée au moins 30 mol-% et de façon particulièrement préférentielle 30 à 70 mol-% de groupes aryle fluoro-substitués.

6. Surface polymère selon l'une des revendications précédentes, **caractérisée en ce que** l'au moins un homopolymère est un polymère choisi du groupe des composés de poly-2,3,4,5,6-pentafluorostyrène, poly-2-fluorostyrène, poly-3-fluorostyrène, poly-4-fluorostyrène, F5-PPX ainsi que des homopolymères de 2-fluoraryl-/3-fluoraryl-/4-fluoraryl-/ et 2,3,4,5,6-pentafluoroaryle-substitués.

7. Surface polymère selon l'une des revendications 1 à 6, **caractérisée en ce que** l'au moins un copolymère est constitué d'un monomère, choisi du groupe des 2,3,4,5,6-pentafluorostyrène, 2-fluorostyrène, 3-fluorostyrène, 4-fluorostyrène, F5-PPX et des combinaisons de ceux-ci et d'un monomère, choisi du styrène, des dérivés de styrène substitués, 5,6-benzo-2-méthylène-1,3-dioxepan, méthylméthacrylate, N-phényl-maléimide et des combinaisons de ceux-ci.

8. Surface polymère selon l'une des revendications précédentes, **caractérisée en ce que** l'au moins un homo- ou copolymère présente un poids moléculaire, en moyenne pondérée, de 1 000 à 2 000 000 g/mol, de façon préférée de 10 000 à 1 000 000 g/mol et particulièrement préférentielle de 50 000 à 300 000 g/mol.

9. Surface polymère selon l'une des revendications précédentes, **caractérisée en ce que** les particules de la surface polymère présentent un diamètre moyen de moins de 3 µm, de façon préférée entre 1 nm et 2 µm et de façon plus préférée entre 500 nm et 1 µm.

10. Surface polymère selon l'une des revendications précédentes, **caractérisée en ce que** la surface présente un angle de déroulement de 50° maximum, de façon préférée de 40° maximum et de façon particulièrement préférée de 0°.

11. Procédé de production d'une surface polymère selon l'une des revendications 1 à 10, **caractérisée en ce qu'**une solution contenant au moins un homo- ou copolymère, qui comprend au moins une chaîne latérale, contenant au moins un groupe aryle fluoro-substitué, est électrofilée.

12. Procédure selon la revendication 11, **caractérisée en ce qu'**une solution de l'au moins un homo- ou copolymère est électrofilée dans un solvant choisi de tétrahydrofurane, diméthylformamide, trichlorométhane et des combinaisons de ceux-ci, et de façon préférée dans un mélange de tétrahydrofurane et de diméthylformamide.

13. Procédé selon la revendication 12, **caractérisée en ce que** la solution contient 0,5 à 20 % en poids, de façon préférée 1 à 10% en poids, de façon plus préférée 1 à 5 % en poids et de façon particulièrement préférentielle 2 % en poids d'un homo- et/ou copolymère.

14. Utilisation d'une surface polymère hydrophobe selon l'une des revendications 1 à 10 comme revêtement imperméable à l'eau, en particulier dans des tapis, du fil à coudre, des cordes, tapis muraux, textiles, tapisseries vêtements, tentes, rideaux décoratifs, rideaux de scène, coutures, pointes de pipettes, ampoules, seringues et autres récipients de stockage pour des produits biologiques et pharmaceutiques, et/ou comme revêtement antimicrobien et/ou bactériophobe.
